# EUROPEAN PATENT APPLICATION

(11) **EP 2 736 195 A2**
(43) Date of publication of application: **28.05.2014**
(21) Application number: 13184595.0
(22) Date of filing: 16.09.2013
(51) Int. Cl.: H04L 12/26

(54) **Network quality monitoring system and method with zero traffic consumption**

(30) Priority: 26.11.2012 CN 201210483939
(71) Applicant: Sercomm Corporation, Taipei 115 (TW)
(72) Inventor: Zhu, Ling, Su Zhou City, Jiang Su Province (CN); Sun, Chao-Yan, 215000 Su Zhou City (CN)
(74) Representative: Von Kreisler Selting Werner - Partnerschaft von Patentanwälten und Rechtsanwälten mbB

(57) **Abstract**

Network quality monitoring system and method with zero traffic consumption are provided, based on a universal network architecture including a physical layer, network layer, transport layer, and application layer. The transport layer includes a heartbeat packet transmission and reception protocol module and heartbeat information, and the application layer includes an internet protocol module and its sequence numbers and timestamps. The heartbeat information, sequence number, and timestamp are parts of a network data stream with normal overhead. The disclosure focuses on heartbeat packets and internet protocol packets, performing statistical calculation by configuring reasonable heartbeat frequency and a statistical period to obtain a network packet loss rate, network delay, and network jitter during the statistical period, thus detecting network quality timely. Some embodiments can be applied to avoid burdening network traffic, and provide reliable, useful indications of network packet loss rate, network delay, and network jitter.

## Description

### BACKGROUND OF THE INVENTION

### Field of the Invention

The invention relates in general to network monitoring system, and more particularly to a network quality monitoring system and a monitoring method, which can provide reliable indications of a network packet loss rate, network delay, and network jitter, without addition of network traffic loading.

### Description of the Related Art

As the communication technology such as 3G and LTE becomes available, the bearer networks have been extended from the traditional fixed networks to the overcrowded Internet through equipment such as featherweight and household base stations. In order to ensure that the communication network borne on the Internet can provide effective, reliable services, it is significantly desirable to timely discover and analyze network quality.

Among the technical applications for the Internet, there have been a number of network quality monitoring tools, such as ping, iperf, and so on. However, these tools or methods have a common defect, i.e., requiring generating network traffic continuously. To be specific, the tools such as ping and iperf all actively initiate data and receive returned data, and then evaluate the network quality by analyzing the characteristics of the related data. While the traffic to be produced for one time is small (e.g., tens to hundreds of kilobytes), it is required to produce data continuously and a server is required to realize the monitoring functionality if real-time network monitoring is needed.

### SUMMARY OF THE INVENTION

In view of the defect of the conventional technique and the technology in the technical field, the disclosure is directed to a network quality monitoring system and a monitoring method with zero traffic consumption, to achieve reliable real-time monitoring network quality without addition of network traffic loading.

According to a first aspect of the disclosure, an embodiment of a network quality monitoring system with zero traffic consumption is provided, based on a universal network architecture including a physical layer, a network layer, a transport layer, and an application layer, wherein the transport layer includes a heartbeat packet transmission and reception protocol module and heartbeat information. The network quality monitoring system is **characterized in that**: the network quality monitoring system includes: a statistics module, a data access terminal of which is connected to the heartbeat packet transmission and reception protocol module, for performing statistical calculation based on the heartbeat information to obtain a network packet loss rate L=(S-R)×100/S, a network delay D=(T1-T0), and a network jitter J=Max(D)-Min(D). In addition, the heartbeat information is part of a regular network data stream; S and R denote number of times of heartbeats sent during a statistical period and number of times of responses received during the statistical period, respectively; T0 and T1 denote a sending time and an arrival time for a heartbeat during the statistical period, respectively; and Max(D) and Min(D) denote a maximum delay and a minimum delay during the statistical period, respectively.

According to the first aspect of the disclosure, another embodiment of a network quality monitoring system with zero traffic consumption is provided, based on a universal network architecture including a physical layer, a network layer, a transport layer, and an application layer, wherein the application layer includes an internet protocol module and its sequence numbers and timestamps. The network quality monitoring system is **characterized in that**: the network quality monitoring system includes: a statistics module, a data access terminal of which is connected to the internet protocol module, for performing statistical calculation based on the sequence numbers and the timestamps to obtain a network packet loss rate L=[X(1)+X(2)+...+X(n)]×100/[S(n)-S(0)], a network delay D=[d(1)+d(2)+...+d(n)]/(n-1), and a network jitter J=Max(D)-Min(D). In addition, the sequence numbers and the timestamps are parts of the regular network data stream; n indicates number of internet protocol packets during a statistical period; S(0) to S(n) denote respective sequence numbers of the n internet protocol packets; X(n)=S(n)-S(n-1) denotes number of packet lack for the last two internet protocol packets during the statistical period; d(n)=|((TM(n)-TM(n-1))/K)×1000-(T(n)-T(n-1))| is a delay for an n-th internet protocol packet; TM(1) to TM(n) denote respective timestamps for the n internet protocol packets; T(1) to T(n) denote respective arrival times of the n internet protocol packets; Max(D) and Min(D) denote a maximum delay and a minimum delay during the statistical period, respectively; and K is a sampling rate.

According to a second aspect of the disclosure, an embodiment of a network quality monitoring method with zero traffic consumption is provided, based on a universal network architecture including a physical layer, a network layer, a transport layer, and an application layer, wherein the transport layer includes a heartbeat packet transmission and reception protocol module and heartbeat information. The network quality monitoring method is characterized by: disposing a statistics module in the universal network architecture and connecting a data access terminal of the statistics module to the heartbeat packet transmission and reception protocol module; and performing, by the statistics module, statistical calculation based on the heartbeat information to obtain a network packet loss rate L=(S-R)×100/S, a network delay D=(T1-T0), and a network jitter J=Max(D)-Min(D). In addition, the heartbeat information is part of a regular network data stream; S and R denote number of times of heartbeats sent during a statistical period and number of times of responses received during the statistical period, respectively; T0 and T1 denote a sending time and an arrival time for a heartbeat during the statistical period, respectively; and Max(D) and Min(D) denote a maximum delay and a minimum delay during the statistical period, respectively.

In the above embodiment, the heartbeat packet transmission and reception protocol module can further configure the heartbeat frequency according to the timeliness requirement for network quality monitoring, and the heartbeat frequency is at a precision level of milliseconds, for example.

According to the second aspect of the disclosure, another embodiment of a network quality monitoring method with zero traffic consumption is provided, based on a universal network architecture including a physical layer, a network layer, a transport layer, and an application layer, wherein the application layer includes an internet protocol module and its sequence numbers and timestamps. The network quality monitoring method is characterized by: disposing a statistics module in the universal network architecture and connecting a data access terminal of the statistics module to the internet protocol module; and performing, by the statistics module, statistical calculation based on the sequence numbers and the timestamps to obtain a network packet loss rate L=[X(1)+X(2)+...+X(n)]×100/[S(n)-S(0)], a network delay D=[d(1)+d(2)+...+d(n)]/(n-1), and network jitter J=Max(D)-Min(D). In addition, the sequence numbers and the timestamps are parts of a regular network data stream; n indicates number of internet protocol packets during a statistical period; S(0) to S(n) denote respective sequence numbers of the n internet protocol packets; X(n)=S(n)-S(n-1) denotes number of packet lack for the last two internet protocol packets during the statistical period; d(n)=|((TM(n)-TM(n-1))/K)×1000-(T(n)-T(n-1))| is a delay for an n-th internet protocol packet; TM(1) to TM(n) denote respective timestamps for the n internet protocol packets; T(1) to T(n) denote respective arrival times of the n internet protocol packets; Max(D) and Min(D) denote a maximum delay and a minimum delay during the statistical period, respectively; and K is a sampling rate.

According to the disclosure, the statistics-based monitoring can be applied to avoid burdening network traffic, and provide reliable, useful indications of network packet loss rate, network delay, and network jitter.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 is a diagram illustrating a topological structure of a network quality monitoring system according to an embodiment.

FIG. 2 is a diagram illustrating the status of transmission and reception of STCP heartbeat packets in a universal communication network.

FIG. 3 is a diagram illustrating the state of an RTP session in a universal communication network.

### DETAILED DESCRIPTION OF THE INVENTION

According to embodiments of the invention, the characteristics of SCTP (Stream Control Transmission Protocol) heartbeats and/or the characteristics of sequence numbers and timestamps of RTP packets are utilized for analysis, with no additional network overhead, to obtain the network quality for a number of communication devices based on SCTP or RTP. The following is to provide exemplary embodiments of the topological structure of a network quality monitoring system as illustrated and steps of a network quality monitoring method.

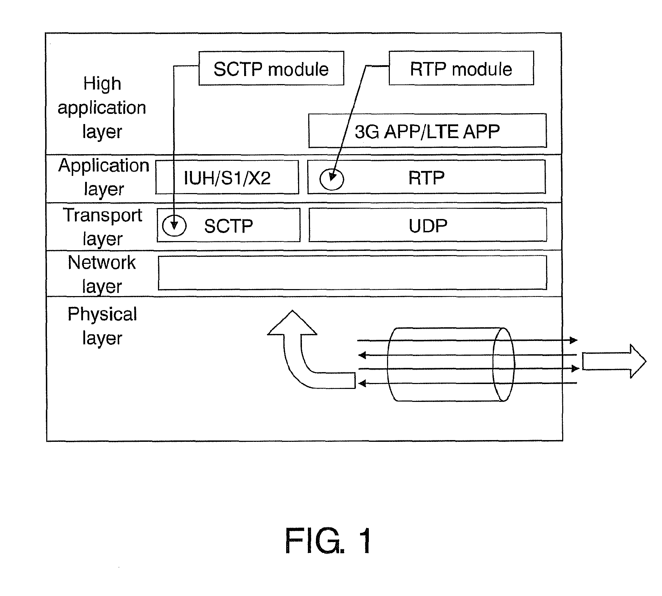

Referring to FIG. 1, a topological structure of a network quality monitoring system is illustrated according to an embodiment. The network quality monitoring system is based on a universal network architecture. The universal network architecture includes a physical layer (e.g., wired data access), a network layer (e.g., IP), a transport layer (e.g., SCTP/UDP), and an application layer (e.g., SCTP METER/RTP METER), or further including a higher application layer (e.g., 3G or LTE) above the application layer. The transport layer includes a heartbeat packet transmission and reception protocol module and heartbeat information, and the application layer includes an internet protocol module and its sequence numbers and timestamps. The heartbeat information, the sequence number, and the timestamp are parts of a regular network data stream. Since the universal network architecture is ordinary technology of the technical field, the functionality for each layer will not described in detail. It is noted that the network quality monitoring system includes a statistics module, a data access terminal of the statistics module is connected to both or either of the heartbeat packet transmission and reception protocol module and the internet protocol module. Based on the above, network quality monitoring can be realized by using two approaches, for example: (1) performing statistical calculation based on the heartbeat information to obtain a network packet loss rate L, a network delay D, and a network jitter J; and (2) performing statistical calculation based on the sequence numbers and the timestamps to obtain a network packet loss rate L, a network delay D, and a network jitter J.

In an embodiment of the monitoring method, statistical calculation can be realized by using the heartbeat packet transmission and reception protocol module in the transport layer and its heartbeat information. Specifically, the SCTP heartbeat process is: initiating a heartbeat to a receiving end, and sending a heartbeat response by the receiving end after receiving the heartbeat. In the process, two SCTP packets (heartbeat packets) are produced, carrying the same heartbeat information, i.e., the sending time of the heartbeat.

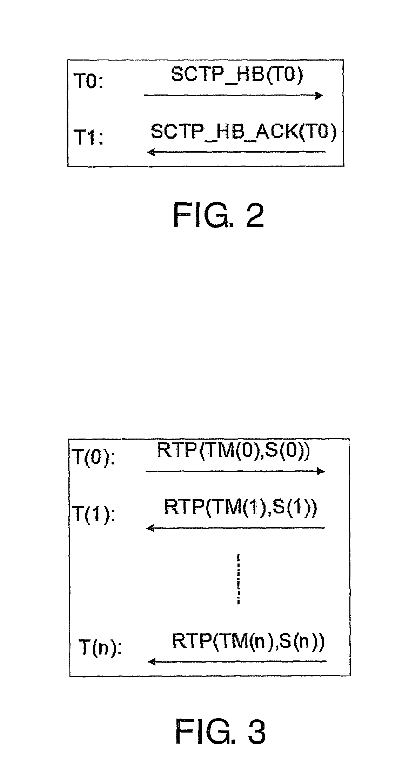

According to the information for the heartbeat, a statistical period can be set with respect to the statistics module. In addition, number of times of heartbeats sent by SCTP during the statistical period (denoted by S) and number of times of responses received by SCTP during the statistical period (denoted by R) are recorded, respectively. Meanwhile, when a correct SCTP heartbeat response is received, an arrival time T1 for the heartbeat is recorded and a sending time T0 in the heartbeat information is read. According to the following equations, statistical calculation can be performed to obtain: a network packet loss rate L=(S-R)×100/S, a network delay D=(T1-T0), and a network jitter J=Max(D)-Min(D). In the above, S and R denote number of times of heartbeats sent during the statistical period and number of times of responses received during the statistical period, respectively. T0 and T1 denote the sending time and an arrival time for a heartbeat during the statistical period, respectively. Max(D) and Min(D) denote a maximum delay and a minimum delay during the statistical period, respectively. The status of transmission and reception of heartbeat packets is illustrated in FIG. 2, for example.

In the above embodiment, the heartbeat frequency can be further configurable according to the requirement for network quality monitoring, and the heartbeat frequency is at a precision level of milliseconds. In addition, timeliness for the network packet loss rate L and the network delay D can be adjusted by controlling the heartbeat frequency.

In another embodiment of the monitoring method, statistical calculation can be realized by using the internet protocol module in the application layer and its RTP packets. Specifically, RTP sequence numbers for the same RTP session are sequential, and the RTP packets carry timestamps that precisely describe generation times and timing relationship between adjacent packets.

According to the information for the RTP packets, a statistical period can be set with respect to the statistics module. In addition, number of times of heartbeats sent by SCTP during the statistical period (denoted by S) and number of times of responses received by SCTP during the statistical period (denoted by R) are recorded, respectively. Meanwhile, when a correct SCTP heartbeat response is received, an arrival time T1 for the heartbeat is recorded and a sending time T0 is read. According to the following equations, statistical calculation can be performed to obtain: a network packet loss rate L=[X(1)+X(2)+...+X(n)]×100/[S(n)-S(0)], a network delay D=[d(1)+d(2)+...+d(n)]/(n-1), and a network jitter J=Max(D)-Min(D). In this above, n indicates number of internet protocol packets during a statistical period. S(0) to S(n) denote respective sequence numbers of the n internet protocol packets. X(n)=S(n)-S(n-1) denotes number of packet lack for the last two internet protocol packets during the statistical period. d(n)=|((TM(n)-TM(n-1))/K)×1000-(T(n)-T(n-1))| is a delay for an n-th internet protocol packet. TM(1) to TM(n) denote respective timestamps for the n internet protocol packets. T(1) to T(n) denote respective arrival times of the n internet protocol packets. Max(D) and Min(D) denote a maximum delay and a minimum delay during the statistical period, respectively, and K is a sampling rate. A state of RTP session is illustrated FIG. 3, for example.

The network quality monitoring system and method are exemplified by the above embodiments. It is understood that in some embodiments the statistics-based monitoring can be applied to achieve technical effects significantly: avoiding burdening network traffic, and providing reliable, useful indications of network packet loss rate, network delay, and network jitter, thus facilitating communication quality practically.

While the invention has been described by way of example and in terms of the embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A network quality monitoring system with zero traffic consumption, based on a universal network architecture including a physical layer, a network layer, a transport layer, and an application layer, wherein the transport layer includes a heartbeat packet transmission and reception protocol module and heartbeat information, the network quality monitoring system **characterized in that**:
the network quality monitoring system includes:
a statistics module, a data access terminal of which is connected to the heartbeat packet transmission and reception protocol module, for performing statistical calculation based on the heartbeat information to obtain a network packet loss rate L=(S-R)×100/S, a network delay D=(T1-T0), and a network jitter J=Max(D)-Min(D),
wherein the heartbeat information is part of a regular network data stream; S and R denote number of times of heartbeats sent during a statistical period and number of times of responses received during the statistical period, respectively; T0 and T1 denote a sending time and an arrival time for a heartbeat during the statistical period, respectively; Max(D) and Min(D) denote a maximum delay and a minimum delay during the statistical period, respectively.

2. A network quality monitoring system with zero traffic consumption, based on a universal network architecture including a physical layer, a network layer, a transport layer, and an application layer, wherein the application layer includes an internet protocol module and its sequence numbers and timestamps, the network quality monitoring system **characterized in that**:
the network quality monitoring system includes:
a statistics module, a data access terminal of which is connected to the internet protocol module, for performing statistical calculation based on the sequence numbers and the timestamps to obtain a network packet loss rate L=[X(1)+X(2)+...+X(n)]×100/[S(n)-S(0)], a network delay D=[d(1)+d(2)+...+d(n)]/(n-1), and a network jitter J=Max(D)-Min(D),
wherein the sequence numbers and the timestamps are parts of a regular network data stream; n indicates number of internet protocol packets during a statistical period; S(0) to S(n) denote respective sequence numbers of the n internet protocol packets; X(n)=S(n)-S(n-1) denotes number of packet lack for the last two internet protocol packets during the statistical period; d(n)=|((TM(n)-TM(n-1))/K)×1000-(T(n)-T(n-1))| is a delay for an n-th internet protocol packet; TM(1) to TM(n) denote respective timestamps for the n internet protocol packets; T(1) to T(n) denote respective arrival times of the n internet protocol packets; Max(D) and Min(D) denote a maximum delay and a minimum delay during the statistical period,
respectively; and K is a sampling rate.

3. A network quality monitoring method with zero traffic consumption, based on a universal network architecture including a physical layer, a network layer, a transport layer, and an application layer, wherein the transport layer includes a heartbeat packet transmission and reception protocol module and heartbeat information, the network quality monitoring method **characterized by**:
disposing a statistics module in the universal network architecture and connecting a data access terminal of the statistics module to the heartbeat packet transmission and reception protocol module; and
performing, by the statistics module, statistical calculation based on the heartbeat information to obtain a network packet loss rate L=(S-R)×100/S, a network delay D=(T1-T0), and a network jitter J=Max(D)-Min(D),
wherein the heartbeat information is part of a regular network data stream; S and R denote number of times of heartbeats sent during a statistical period and number of times of responses received during the statistical period, respectively; T0 and T1 denote a sending time and an arrival time for a heartbeat during the statistical period, respectively; and Max(D) and Min(D) denote a maximum delay and a minimum delay during the statistical period, respectively.

4. A network quality monitoring method with zero traffic consumption, based on a universal network architecture including a physical layer, a network layer, a transport layer, and an application layer, wherein the application layer includes an internet protocol module and its sequence numbers and timestamps, the network quality monitoring method **characterized by**:
disposing a statistics module in the universal network architecture and connecting a data access terminal of the statistics module to the internet protocol module; and
performing, by the statistics module, statistical calculation based on the sequence numbers and the timestamps to obtain a network packet loss rate L=[X(1)+X(2)+...+X(n)]×100/[S(n)-S(0)], a network delay D=[d(1)+d(2)+...+d(n)]/(n-1), and network jitter J=Max(D)-Min(D),
wherein the sequence numbers and the timestamps are parts of a regular network data stream; n indicates number of internet protocol packets during a statistical period; S(0) to S(n) denote respective sequence numbers of the n internet protocol packets; X(n)=S(n)-S(n-1) denotes number of packet lack for the last two internet protocol packets during the statistical period; d(n)=|((TM(n)-TM(n-1))/K)×1000-(T(n)-T(n-1))| is a delay for an n-th internet protocol packet; TM(1) to TM(n) denote respective timestamps for the n internet protocol packets; T(1) to T(n) denote respective arrival times of the n internet protocol packets; Max(D) and Min(D) denote a maximum delay and a minimum delay during the statistical period, respectively; and K is a sampling rate.
